(19) Europäisches Patentamt
European Patent Office
Office européen des brevets

(11) Veröffentlichungsnummer: **0 402 689 A2**

(12) **EUROPÄISCHE PATENTANMELDUNG**

(21) Anmeldenummer: **90110033.9**

(51) Int. Cl.[5]: **C08G 64/06**

(22) Anmeldetag: **26.05.90**

(30) Priorität: **10.06.89 DE 3919046**

(43) Veröffentlichungstag der Anmeldung:
**19.12.90 Patentblatt 90/51**

(84) Benannte Vertragsstaaten:
**DE FR GB IT**

(71) Anmelder: **BAYER AG**

**D-5090 Leverkusen 1 Bayerwerk(DE)**

(72) Erfinder: **Pakull, Ralf, Dr.**
**Neue-Linner-Strasse 75**
**D-4150 Krefeld(DE)**
Erfinder: **Freitag, Dieter, Dr.**
**Hasenheide 10**
**D-4150 Krefeld(DE)**
Erfinder: **Eckhardt, Volker, Dr.**
**Bodelschwinghstrasse 14**
**D-4150 Krefeld(DE)**
Erfinder: **Idel, Karsten, Dr.**
**Am Schwarzkamp 38**
**D-4150 Krefeld(DE)**
Erfinder: **Kricheldorf, Hans R., Prof. Dr.**
**Menzelstrasse 10**
**D-2000 Hamburg 52(DE)**
Erfinder: **Lübbers, Dierik**
**Steinacker 26**
**D-2000 Hamburg 54(DE)**

(54) **Neue thermotrope Polycarbonate, Verfahren zu ihrer Herstellung und ihre Verwendung zur Herstellung von Formkörpern, Filamenten, Fasern und Folien.**

(57) Die neuen thermotropen Polycarbonate mit wiederkehrenden Struktureinheiten der Formeln

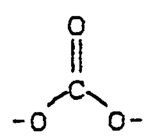

(I),

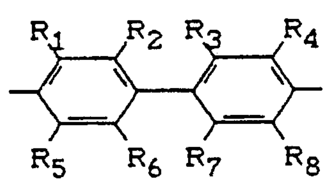

(II),

und

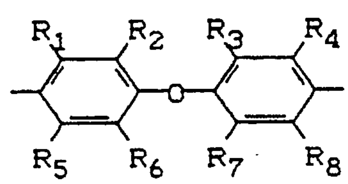

(III),

besitzen gute mechanische Eigenschaften und eine gute Verarbeitbarkeit. Sie lassen dich in üblicher Weise zur Herstellung von Formkörpern, Filamenten, Fasern und Folien verwenden.

EP 0 402 689 A2

Xerox Copy Centre

# Neue thermotrope Polycarbonate, Verfahren zu ihrer Herstellung und ihre Verwendung zur Herstellung von Formkörpern, Filamenten, Fasern und Folien

Die Erfindung betrifft hochmolekulare, thermotrope Polycarbonate mit ausgezeichneten mechanischen Eigenschaften und guter Verarbeitbarkeit, ein Verfahren zu ihrer Herstellung sowie ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polyester sind bereits bekannt. Eine Literaturzusammenfassung befindet sich beispielsweise in DE-OS 33 25 787 und EP-OS 134 959. Dort wird auch eine Untersuchung des flüssigkristallinen Zustands der Polymerschmelzen beschrieben.

Polycarbonate, die aus 4,4′-Dihydroxydiphenyleinheiten aufgebaut sind, sind bekannt (vgl. z.B. DE-OS 1 108 433 und DE-OS 1 141 789). Überraschenderweise wurde nun gefunden, daß Polycarbonate, die mindestens 25 Mol-% 4,4′- Dihydroxydiphenyleinheiten, bezogen auf die Summe der Bisphenole, enthalten, in Kombination mit bestimmten anderen Bisphenolen flüssig-kristalline Schmelzen bilden.

Flüssigkristalline Polycarbonate auf der Basis von aliphatischen Diolen und aromatischen Dihydroxyverbindungen sind bereits bekannt (z.B. auf Basis von p,p′-Bis(ω-hydroxyalkylenoxy)biphenyle, p,p′-Bis(ω-hydroxyalkylenoxy)-phenyle, 1,4-Butandiol, 1,6-Hexandiol oder 1,8-Octandiol) (M. Sato et. al.; J. Polym. Sci., Polym. Chem. Edn., 26, 3077 (1988), M. Sato et a.; Makromol. Chem., Rapid Commun. 7, 231 (1986), sowie JP 62/212 427.

Nachteilig ist die geringe thermische Beständigkeit von aliphatischen Polycarbonaten (H. Schnell, Chemistry and Physics of Polycarbonates, Polymer Rev., Vol. IX, Seite 27).

Gegenstand der Erfindung sind thermotrope, vollaromatische Polycarbonate mit wiederkehrenden Einheiten der Formeln

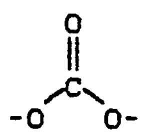
(I),

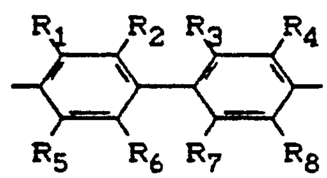
(II)

und

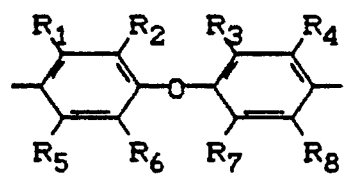
(III),

worin

die Reste $R_1$ bis $R_8$ unabhängig voneinander Wasserstoff, Halogen, bevorzugt Chlor oder Brom, $C_1$-$C_8$-Alkyl, bevorzugt Methyl, $C_5$-$C_6$-Cycloalkyl, bevorzugt Cyclohexyl, $C_6$-$C_{10}$-Aryl, bevorzugt Phenyl, oder $C_7$-$C_{12}$-Arylalkyl, bevorzugt Phenyl-$C_1$-$C_4$-Alkyl, insbesondere Benzyl, bedeuten,

und das Molverhältnis von (I):(II):(III) 1:0,25-0,9:0,1-0,75, vorzugsweise 1:0,4-0,8:0,6-0,2, insbesondere 1:0,5-0,7:0,5-0,3, beträgt.

Als Reste $R_1$ bis $R_8$ werden als besonders bevorzugt genannt: Wasserstoff, Chlor, Brom und Methyl. Ganz besonders bevorzugt ist Wasserstoff.

Diphenole, die zu Resten der Formel (II) führen, sind beispielsweise 4,4′-Dihydroxydiphenyl, 3,3′,5,5′-Tetramethyl-4,4′-dihydroxydiphenyl, 3,3′-Diphenyl-4,4′-dihydroxydiphenyl, bevorzugt ist 4,4′-Dihydroxydiphenyl.

Bevorzugtes Bisphenol, das zu Resten der Formel (III) führt, ist 4,4′-Dihydroxydiphenylether.

Bei den erfindungsgemäßen thermotropen, vollaromatischen Polycarbonaten können bis zu 20 %,

insbesondere 5 bis 20 %, der Struktureinheit der Formel (III) durch Struktureinheiten der Formeln (IV) und/oder (V)

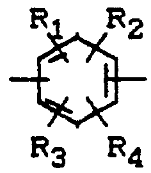

(IV),

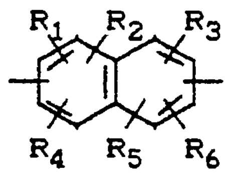

(V),

worin
die Reste $R^1$ bis $R^6$ die obengenannte Bedeutung besitzen,
ersetzt sein. Bei gleichzeitiger Anwesenheit der Struktureinheiten der Formeln (IV) und (V) beträgt das Verhältnis (IV):(V) 0,9-0,1:0,1-0,9, bevorzugt 0,8-0,2:0,2-0,8.

Als Diphenole, die zu Struktureinheiten der Formeln (IV) und (V) führen, werden z.B. genannt: Hydrochinon, Chlorhydrochinon,Methylhydrochinon, 2,6-Dihydroxynaphthalin und 1,4-Dihydroxynaphthalin, bevorzugt Hydrochinon und 2,6-Dihydroxynaphthalin.

Die erfindungsgemäßen, thermotropen Polycarbonate können hergestellt werden, indem man die Diphenole gegebenenfalls unter Mitverwendung von Verzweigern und/oder Kettenabbrechern in den üblichen Mengen, z.B. nach dem Phasengrenzflächenverfahren (s. dazu H. Schnell, Chemistry and Physics of Polycarbonates, Polymer Rev., Vol. IX, Seite 27 ff., Interscience Publishers New York, 1964) umsetzt.

Als Endgruppen können die erfindungsgemäßen, thermotropen Polycarbonate von Kettenabbrechern herrührende Reste enthalten. Geeignete Kettenabbrecher sind aromatische Verbindungen mit einer funktionellen Gruppe, wie aromatische Säurehalogenide, Phenole oder substituierte Phenole, insbesondere $C_1$-$C_{15}$-Alkyl-substituierte Phenole. Die Kettenabbrecher sind in den üblichen Mengen einsetzbar, die sich nach dem jeweils einzustellendden Molekulargewicht der erfindungsgemäßen, thermotrop flüssigkristallinen Polycarbonate bestimmt. Im allgemeinen werden 0,5 Mol-% bis 10,0 Mol-%, bezogen auf eingesetzte Diphenole, eingesetzt. Bevorzugte Kettenabbrecher sind Phenol, p-tert.-Butylphenol, p-Chlorphenol und 2,4,6-Tribromphenol.

Es können auch verzweigende drei- oder höherfunktionelle Phenole in Mengen von etwa 0,05 bis 2 mol-%, bezogen auf die Summe der eingesetzten Diphenole, wie 2,4-Bis-(4-hydroxy-phenyl-isopropyl)-phenol, 2,6-Bis-(2′-hydroxy-5′-methyl-benzyl)-4-methylphenol, 2-(4-Hydroxyphenyl)-2-(2,4-dihydroxyphenyl)-propan und 1,4-Bis-(4,4′-dihydroxytriphenylmethyl)-benzol, eingesetzt werden. Trifunktionelle Verbindungen sind z.B. 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Die erfindungsgemäßen, thermotrop flüssigkristallinen Polycarbonate können die Reste (II) und (III) in sta tistischer Verteilung, in Segmenten oder in Blöcken enthalten.

Die Schmelzviskosität der erfindungsgemäßen thermotropen, flüssigkristallinen Polycarbonate [gemessen jeweils oberhalb der durch DSC bestimmten Übergangstemperatur von der kristallinen in die flüssigkristalline Phase (üblicherweise zwischen 200 und 350 °C)]unter Verwendung einer Düse mit einem Länge/Durchmesser-Verhältnis von 20 bei einer Schergeschwindigkeit von $10^3 s^{-1}$] beträgt in der Regel 2 bis 2000, vorzugsweise 5 bis 1000, insbesondere 10 bis 500 Pas.

Die erfindungsgemäßen thermotropen, flüssigkristallinen Polycarbonate können infolge ihrer relativ geringen Schmelzviskosität thermoplastisch zu Formkörpern, Filamenten, Fasern, Bändern, Folien und Filmen verarbeitet werden. Durch bei der Verarbeitung auftretende Scherkräfte wird eine Molekülorientierung erzielt, die in hohem Maße von der Stärke dieser Kräfte beeinflußt wird. Desweiteren zeigen sie eine ausgeprägte Strukturviskosität, d.h., daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen thermotropen, flüssigkristallinen Polycarbonaten können Formteile hoher Zugfestigkeit, hoher Wärmeformbeständigkeit und großer Dimensionsstabilität hergestellt werden. Da die

erfindungsge mäßen Polycarbonate außerordentlich chemikalienresistent sind, eignen sie sich bevorzugt zur Herstellung von:

- elektrotechnischen Artikeln, wie Isolatoren, gedruckten Schaltungen, Steckkontakten, Armaturenteilen und Umhüllungen von integrierten Schaltungen,
- Teilen der Flugzeuginnenausstattung,
- Teilen medizinisch-technischer Geräte.

Die erfindungsgemäßen thermotropen, flüssigkristallinen Polycarbonate können aber auch als Überzugs- und Beschichtungsmaterial - pulverförmig oder dispergiert -verwendet werden. Auch zur Herstellung verstärkter oder gefüllter Formmassen mit einem Verstärkungs- bzw. Füllstoffgehalt von etwa 5 bis 65 Gew.-%, bezogen auf verstärkte oder gefüllte Formmasse, sind sie bestens geeignet.

Außerdem können die erfindungsgemäßen thermotropen Polycarbonate noch andere Zusätze enthalten, wie Polyester, Polysulfone, Polyethersulfone, Polyetherketone, Polyphenylensulfid sowie Polyamide, darüberhinaus Stabilisatoren, Pigmente, Fließmittel, Entformungsmittel-Flammschutzmittel und/oder Antistatika. Diese Zusätze werden in üblichen, wirksamen Mengen den erfindungsgemäßen Polycarbonaten zugegeben.

Weiterer Gegenstand der Erfindung ist also die Verwendung der neuen thermotropen, flüssigkristallinen Polycarbonate zur Herstellung von Formkörpern, Filamenten, Fasern und Filmen.

Die Prozentangaben der nachfolgenden Beispiele beziehen sich jeweils auf das Gewicht.

Der Zug-E-Modul wurde gemäß DIN 53 455 gemessen.

## Beispiel 1

In einen 6-l-Dreihalskolben mit Rührer, Gaseinleitungsrohr und Innenthermometer wurden unter Kühlung auf 15° C und Stickstoffbeschleierung folgende Substanzen eingewogen:

1,0 l Wasser
3,0 l Methylenchlorid
93,1 g = 0,5 Mol 4,4′-Dihydroxydiphenyl
101,1 g = 0,5 Mol 4,4′-Dihydroxydiphenylether
128,0 g = 3,2 Mol Natriumhydroxid.

Unter Rühren wurden innerhalb von 60 Min. 158,4 g = 1,6 Mol Phosgen in die Mischung eingeleitet. Anschließend wurden 1,4 g = 0,01 Mol Ethylpiperidin zugesetzt und es wurde 45 Min. weitergerührt. Das entstandene Polycarbonat wurde durch Eingießen des Ansatzes in 10 l Methanol ausgefällt und durch Filtration isoliert.

Es wurden 208,4 g Polycarbonat erhalten (94,6 % d.Th.).

Unter dem Heiztischmikroskop wurde oberhalb von 240° C eine flüssigkristalline Phase beobachtet.

Die relative Viskosität in Trifluoressigsäure/Methylenchlorid (1:4, 2 g/l, 20° C) betrug 1,42.

Der Zug-E-Modul betrug 3600 MPa.

## Beispiel 2

In einen 1-l-Dreihalskolben mit Rührer, Gaseinleitungsrohr und Innenthermometer wurden unter Kühlung auf 15° C und Stickstoffbeschleierung folgende Substanzen eingewogen:

0,1 l Wasser
0,3 l Methylenchlorid
3,7 g = 0,02 Mol 4,4′-Dihydroxydiphenyl
12,1 g = 0,06 Mol 4,4′-Dihydroxydiphenylether
10,2 g = 0,26 Mol Natriumhydroxid.

Unter Rühren wurden innerhalb von 60 Min. 12,7 g = 0,13 Mol Phosgen in die Mischung eingeleitet. Anschließend wurden 0,1 g = 0,001 Mol Ethylpiperidin zugesetzt und es wurde 45 Min. weitergerührt. Das entstandene Polycarbonat wurde durch Eingießen des Ansatzes in 2 l Methanol ausgefällt und durch Filtration isoliert.

Es wurden 9,1 g Polycarbonat erhalten (52,5 % d.Th.).

Unter dem Heiztischmikroskop wurde oberhalb von 220° C eine flüssigkristalline Phase beobachtet.

## Ansprüche

1. Thermotrope, vollaromatische Polycarbonate mit wiederkehrenden Einheiten der Formeln

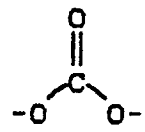

(I),

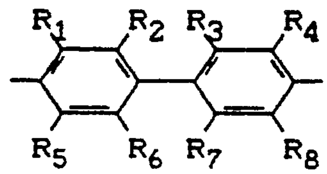

(II)

und

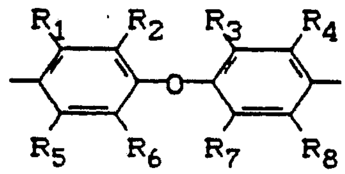

(III),

worin
die Reste $R_1$ bis $R_8$ unabhängig voneinander Wasserstoff, Halogen, $C_1$-$C_8$-Alkyl, $C_5$-$C_6$-Cycloalkyl, $C_6$-$C_{10}$-Aryl oder $C_7$-$C_{12}$-Arylalkyl bedeuten,
und das Molverhältnis von (I):(II):(III) 1:0,25-0,9:0,1-0,75 beträgt.

2. Thermotrope, vollaromatische Polycarbonate nach Anspruch 1, dadurch gekennzeichnet, daß 5 bis 20 % der Struktureinheit (III) durch Struktureinheiten der Formeln (IV) und/oder (V)

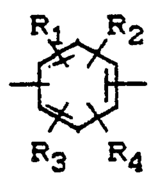

(IV),

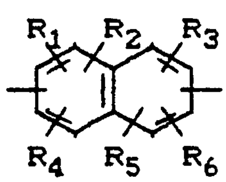

(V),

worin
die Reste $R_1$-$R_6$ unabhängig voneinander Wasserstoff, Halogen, $C_1$-$C_8$-Alkyl, $C_5$-$C_6$-Cycloalkyl, $C_6$-$C_{10}$-Aryl oder $C_7$-$C_{12}$-Arylalkyl bedeuten,
ersetzt sein können.

3. Verwendung der thermotropen Polycarbonate nach Ansprüchen 1 und 2 zur Herstellung von Formkörpern, Filamenten, Fasern und Filmen.